# EUROPÄISCHE PATENTSCHRIFT

(11) **EP 2 392 068 B1**
(45) Veröffentlichungstag und Bekanntmachung des Hinweises auf die Patenterteilung: **13.02.2019**
(21) Anmeldenummer: 09806166.6
(22) Anmeldetag: 15.12.2009
(51) Int. Cl.: H02P 6/185

(54) **POSITIONSBESTIMMUNG EINES ELEKTRISCHEN ANTRIEBS MIT ZWEI STATOREN UND ZWEI ROTOREN**
POSITION DETERMINATION OF AN ELECTRIC DRIVE HAVING TWO STATORS AND TWO ROTORS
DÉTERMINATION DE LA POSITION D'UN ENTRAÎNEMENT ÉLECTRIQUE AYANT DEUX STATORS ET DEUX ROTORS

(30) Priorität: 29.01.2009 DE 102009006712
(43) Veröffentlichungstag der Anmeldung: 07.12.2011
(73) Patentinhaber: Strothmann, Rolf, 66740 Saarlouis (DE)
(72) Erfinder: Strothmann, Rolf, 66740 Saarlouis (DE)
(74) Vertreter: Bernhardt, Reinhold
(86) Internationale Anmeldenummer: PCT/DE2009/001758
(87) Internationale Veröffentlichungsnummer: WO 2010/085929

(56) Entgegenhaltungen:
- EP-A1- 1 624 552
- WO-A1-2007/140576
- DE-A1- 10 031 423
- DE-A1-102006 046 638
- JP-A- 61 098 147
- US-A1- 2006 244 335

## Beschreibung

Die Erfindung betrifft einen elektrischen Antrieb, insbesondere für einen Schwenkarm, z.B. einen Roboterarm, mit einem Rotor, mehreren magnetischen Perioden sowie mit einer Einrichtung für die Bestimmung der Drehlage des Rotors anhand wenigstens eines Messsignals, das für die Induktivität eines Polwicklungsstrangs maßgebend ist, die von der Lage des Polwicklungsstrangs relativ zu den magnetischen Perioden abhängt.

Ein elektrischer Antrieb solcher Art ist aus der DE 100 31 423 A1 und der DE 10 2006 046 638 A1 bekannt. Die Drehposition des Rotors einer elektrischen Maschine wird anhand eines von der Phasenstranginduktivität abhängigen Spannungssignals bestimmt. Beim Betrieb der elektrischen Maschine durch Pulsweitenmodulation lassen sich solche Signale z.B. am Sternpunkt im Stern verschalteter Phasenstränge abgreifen. Da sich die Phasenstranginduktivität periodisch entsprechend den magnetischen Perioden ändert, kann die Drehlage des Rotors auf diese Weise nur innerhalb des jeweiligen Drehwinkelbereichs einer magnetischen Periode bestimmt werden. Drehlagebestimmungen darüber hinaus sind nur indirekt durch Zählung der durchlaufenen magnetischen Perioden möglich. Die Zöhlungsinformation darf nicht verloren gehen.

Das Japanische Patent JP 61 098 147 offenbart einen Motor mit zwei Statoren und zwei Rotoren, wobei die Rotoren eine Anzahl von magnetischen Perioden aufweisen, die teilerfremd sind.

Der Erfindung liegt die Aufgabe zugrunde, einen neuen elektrischen Antrieb der eingangs erwähnten Art zu schaffen, der eine direkte Drehlagebestimmung in einem größeren Drehwinkelbereich als nach dem Stand der Technik ermöglicht.

Der diese Aufgabe lösende elektrische Antrieb nach der Erfindung ist dadurch gekennzeichnet, dass zwei gekoppelte, gemeinsam in zueinander festem Drehwinkelverhältnis drehbare Rotorteile und für die Rotorteile getrennte Anordnungen von magnetischen Perioden und Polwicklungssträngen vorgesehen sind, wobei die Zahlen der magnetischen Perioden je Rotorteil teilerfremd sind, und dass die Einrichtung für die Bestimmung der Drehlage des Rotors zur Lagebestimmung aus den Messsignalen für die beiden Rotorteile vorgesehen ist.

Vorteilhaft lässt sich der Rotordrehwinkel durch die Erfindung direkt innerhalb einer vollen Drehung ermitteln. Innerhalb der vollen Drehung treten keine übereinstimmenden Wertepaare der beiden Messsignale auf, so dass ein eindeutiger Zusammenhang zwischen den Messsignalwertepaaren und dem Drehwinkel besteht.

Der erfindungsgemäße Antrieb eignet sich daher in besonderem Maße für begrenzt bewegte Objekte, wie z.B. Schwenkarme.

Während es denkbar wäre, den elektrischen Antrieb in zwei vollkommen selbständige Maschinen zu unterteilen, deren Rotorwellen in gegenseitiger Antriebsverbindung, z.B. über ein Zahnrad, stehen, weisen gemäß einer bevorzugten Ausführungsform der Erfindung die Rotorteile eine gemeinsame Drehachse auf. Insbesondere sind die Rotorteile miteinander axial starr im Drehwinkelverhältnis 1:1 gekoppelt.

In einer solchen Ausführungsform kann für die Rotorteile ein gemeinsames Gehäuse vorgesehen sein, wobei die Rotorteile einen Außenläufer bilden. Entsprechend lassen sich die getrennten Polwicklungsanordnungen an einem gemeinsamen, innerhalb der Rotorteile angeordneten Statorträger anbringen.

Vorzugsweise umfasst die Einrichtung für die Ermittlung der Drehlage des Rotors die Messsignale an den Polwicklungsanordnungen als Spannungssignale abgreifende Messeinrichtungen.

Diese Messeinrichtungen können insbesondere zum Abgreifen der Messsignale am Sternpunkt im Stern verschalteter Phasenstränge der Polwicklungsanordnungen vorgesehen sein.

Die Einrichtung für die Ermittlung der Drehlage des Rotors umfasst zweckmäßig die Messsignale normierende Einrichtungen, welche die Vergleichbarkeit der Messsignale verbessern.

Ferner umfasst die Einrichtung für die Ermittlung der Drehlage des Rotors zweckmäßig eine die Messsignale mit gespeicherten Tabellenwerten vergleichende Einrichtung. In der Vergleichseinrichtung können Wertepaare der Messsignale oder Quotienten der Messsignale in Zuordnung zu Drehwinkelpositionen (α) gespeichert sein.

Die Erfindung wird nachfolgend anhand eines Ausführungsbeispiels und der beiliegenden, sich auf dieses Ausführungsbeispiel beziehenden Zeichnungen näher erläutert. Es zeigen:
- Fig. 1: eine elektrische Antriebsmaschine nach der Erfindung,
- Fig. 2: eine die Drehlageabhängigkeit von Phasenstranginduktivitäten der Maschine von Fig. 1 erläuternde Darstellung, und
- Fig. 3: eine Betriebseinrichtung für die Antriebsmaschine von Fig. 1, die eine Einrichtung zur Ermittlung der Rotordrehlage umfasst.

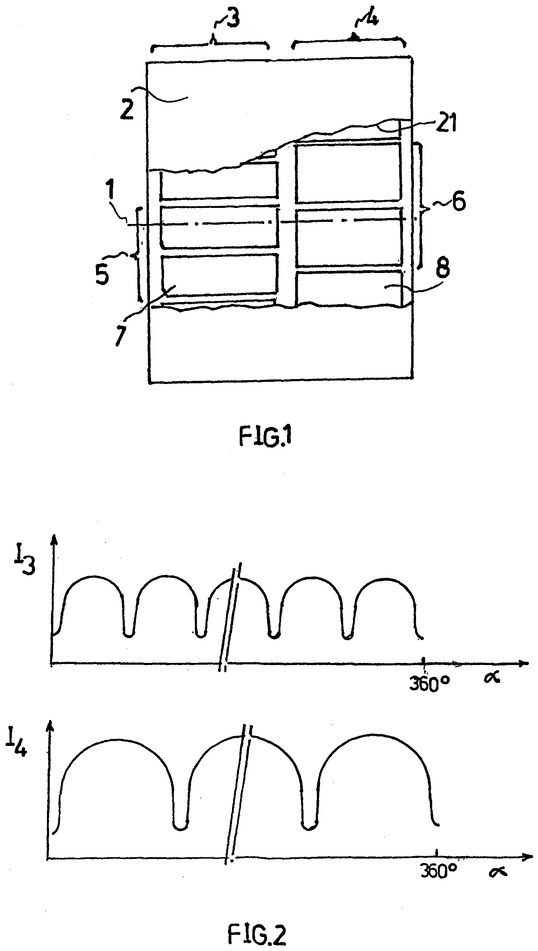

Eine elektrische Maschine weist einen um eine Achse 1 drehbaren Rotor 2 auf. Innerhalb des einen Außenläufer bildenden Rotors 2 befindet sich, in Fig. 1 nicht sichtbar, der Stator.

Die vielpolige elektrische Maschine umfasst neben gemeinsamen Gehäuse- und Halterungsteilen zwei Rotorteile 3 und 4 mit getrennten Anordnungen magnetischer Perioden 5 und 6 in unterschiedlicher Anzahl je Anordnung, wobei die magnetischen Perioden 5 und 6 durch Permanentmagnete 7 und 8 gebildet und die Permanentmagnete mit einem den Rotorteilen gemeinsamen Gehäuse 21 verbunden sind. Unterschiedlich sind auch die Zahlen der Statorpole getrennter, den Rotorteilen 3 und 4 zugeordneter Polwicklungsanordnungen.

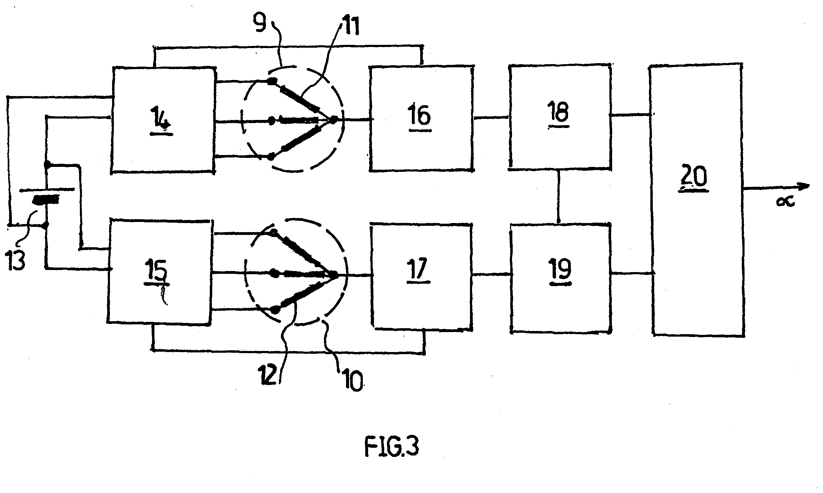

In dem beschriebenen Ausführungsbeispiel weisen die Polwicklungsanordnungen jeweils drei im Stern verschaltete Phasenstränge 11 bzw. 12 (Fig. 3) mit jeweils mehreren Polwicklungen auf.

Die Induktivität der Phasenstränge hängt von der Feldstärke des die Polwicklungskerne durchsetzenden Magnetfeldes und damit von der Stellung des Rotors 2 relativ zu den Phasensträngen ab. Die Induktivität I der einzelnen Phasenstränge ändert sich periodisch mit dem Rotordrehwinkel a, wobei die Drehwinkelperioden wiederkehrender Induktivität den magnetischen Perioden entsprechen.

Fig. 2a zeigt die Induktivität I₃ eines dem Rotorteil 3 zugeordneten Phasenstrangs 11 und Fig. 2b die Induktivität I₄ eines dem Rotorteil 4 zugeordneten Phasenstrangs 12 jeweils in Abhängigkeit vom Rotordrehwinkel a für eine Drehung des Rotors 2 um 360°. Entsprechend den unterschiedlichen Zahlen magnetischer Perioden der Rotorteile 3 und 4 ergeben sich für die volle Rotordrehung periodisch wiederkehrende Maxima der Induktivität I₃ und I₄ in unterschiedlicher Zahl.

Sofern die Zahlen der magnetischen Perioden 5 und 6 der Rotorteile 3 und 4 teilerfremd sind, ergibt sich innerhalb einer vollen Drehung des Rotors 2 kein sich wiederholendes Wertepaar I₃,I₄. Jedem Wertepaar I₃,I₄ ist eindeutig ein Drehwinkel a zugeordnet.

Der Betrieb der elektrischen Maschine von Fig. 1 erfolgt in dem hier beschriebenen Beispiel nach dem Impulsmodulationsverfahren unter Verwendung der in Fig. 3 schematisch dargestellten Einrichtung.

Strichlinien 9 und 10 in Fig. 3 deuten die Rotorteile 3 und 4 an, deren diesen zugeordnete Polwicklungsanordnungen jeweils drei im Stern verschaltete Phasenstränge 11 bzw. 12 umfassen.

Die Phasenstränge 11 stehen mit einer Steuereinrichtung 14 und die Phasenstränge 12 mit einer Steuereinrichtung 15 in Verbindung. Die Steuereinrichtungen 14,15 erzeugen aus der Gleichspannung einer Batterie 13 Spannungsimpulse zum getrennten Betrieb der die Rotorteile 3 und 4 umfassenden Teilmaschinen.

Eine erste Messeinrichtung 16 greift am Sternpunkt der Phasenstränge 11, ggf. gesteuert durch die Steuereinrichtung 14, ein von der Induktivität I₃ abhängiges Spannungssignal S₃ ab. Eine zweite Messeinrichtung 17 greift am Sternpunkt der Phasenstränge 12 ein entsprechendes Spannungssignal S₄ ab.

Zu den Möglichkeiten der Erzeugung bzw. des Abgreifens von Spannungssignalen, insbesondere am Sternpunkt wird auf die hier einbezogenen Schutzrechtsschriften DE 100 31 423 A1 und DE 10 2006 046 638 A1 verwiesen.

An die Messeinrichtungen 15 und 17 schließt sich jeweils eine Normierungseinrichtung 18 bzw. 19 an. Die Normierungseinrichtungen bilden aus den Spannungssignalen S₃,S₄ normierte, z.B. auf eine mechanische Anschlagposition des Rotors bezogene, Spannungssignale S₃,S₄.

Eine mit den Normierungseinrichtungen 18,19 verbundene Vergleichseinrichtung 20 enthält eine Nachschlagetabelle, in der Wertepaaren S₃,S₄ oder Quotienten S₃/S₄ der diesen entsprechende Drehwinkel α des Rotors 2 zugeordnet ist.

## Patentansprüche

1. Elektrischer Antrieb, insbesondere für einen Schwenkarm, z.B. einen Roboterarm, mit einem Rotor (2), mehreren magnetischen Perioden (5,6) sowie mit einer Einrichtung (14-20) für die Bestimmung der Drehlage des Rotors (2) anhand wenigstens eines Messsignals, das für die Induktivität eines Polwicklungsstrangs (11,12) maßgebend ist, die von der Lage des Polwicklungsstrangs (11,12) relativ zu den magnetischen Perioden (5,6) abhängt
**dadurch gekennzeichnet,**
**dass** zwei gekoppelte, gemeinsam in zueinander festem Drehwinkelverhältnis drehbare Rotorteile (3,4) und für die Rotorteile (3,4) getrennte Anordnungen von magnetischen Perioden (5,6) und Polwicklungssträngen (11,12) vorgesehen sind, wobei die Zahlen der magnetischen Perioden (5,6) je Rotorteil (3,4) teilerfremd sind, und dass die Einrichtung für die Bestimmung der Drehlage des Rotors (2) zur Lagebestimmung aus den Messsignalen (S3,S4) für die beiden Rotorteile (3,4) vorgesehen ist.

2. Antrieb nach Anspruch 1,
**dadurch gekennzeichnet,**
**dass** die Rotorteile (3,4) eine gemeinsame Drehachse (1) aufweisen.

3. Antrieb nach Anspruch 1 oder 2,
**dadurch gekennzeichnet,**
**dass** die Rotorteile (3,4) miteinander axial starr gekoppelt sind.

4. Antrieb nach einem der Ansprüche 1 bis 3,
**dadurch gekennzeichnet,**
**dass** für die Rotorteile (3,4) ein gemeinsames Gehäuse (21) vorgesehen ist.

5. Antrieb nach einem der Ansprüche 1 bis 4,
**dadurch gekennzeichnet,**
**dass** die Einrichtung (14-20) für die Ermittlung der Drehlage des Rotors (2) die Messsignale (S3,S4) an den Polwicklungsanordnungen als Spannungssignale abgreifende Messeinrichtungen (16,17) umfasst.

6. Antrieb nach Anspruch 5,
**dadurch gekennzeichnet,**
**dass** die Messeinrichtungen (16,17) zum Abgreifen der Messsignale (S3,S4) als am Sternpunkt im Stern verschalteter Phasenstränge (11,12) der Polwicklungsanordnungen vorgesehen sind.

7. Antrieb nach einem der Ansprüche 1 bis 6,
**dadurch gekennzeichnet,**
**dass** die Einrichtung (14-20) für die Bestimmung der Drehlage des Rotors (2) die Messsignale (S3,S4) normierende Einrichtungen (18,19) umfasst.

8. Antrieb nach einem der Ansprüche 1 bis 7,
**dadurch gekennzeichnet,**
**dass** die Einrichtung (14-20) für Ermittlung der Drehlage des Rotors (2) eine die Messsignale (S3,S4) mit gespeicherten Tabellenwerten vergleichende Einrichtung (20) umfasst.

9. Antrieb nach Anspruch 8,
**dadurch gekennzeichnet,**
**dass** in der Vergleichseinrichtung (20) Wertepaare oder Quotienten der Messsignale (S3,S4) in Zuordnung zu Drehwinkelpositionen (a) gespeichert sind.

## Claims

1. Electric drive, in particular for a pivot arm, for example a robot arm, having a rotor (2), a plurality of magnetic periods (5, 6) and having a device (14-20) for the determination of the rotational position of the rotor (2) based on at least one measurement signal, which is indicative of the inductance of a pole winding section (11, 12), which inductance depends on the position of the pole winding section (11, 12) relative to the magnetic periods (5, 6),
**characterized**
**in that** two coupled rotor parts (3, 4), which can rotate together at a rotational angle ratio that is fixed with respect to one another, and arrangements of magnetic periods (5, 6) and pole winding sections (11, 12), which arrangements are separate for the rotor parts (3, 4), are provided, wherein the numbers of the magnetic periods (5, 6) per rotor part (3, 4) are coprime, and in that the device for the determination of the rotational position of the rotor (2) is provided to determine the position from the measurement signals (S3, S4) for the two rotor parts (3, 4).

2. Drive according to Claim 1,
**characterized**
**in that** the rotor parts (3, 4) have a common axis of rotation (1).

3. Drive according to Claim 1 or 2,
**characterized**
**in that** the rotor parts (3, 4) are coupled to one another in an axially rigid manner.

4. Drive according to one of Claims 1 to 3,
**characterized**
**in that** a common housing (21) is provided for the rotor parts (3, 4).

5. Drive according to one of Claims 1 to 4,
**characterized**
**in that** the device (14-20) for the identification of the rotational position of the rotor (2) comprises measurement devices (16, 17) that tap the measurement signals (S3, S4) at the pole winding arrangements as voltage signals.

6. Drive according to Claim 5,
**characterized**
**in that** the measurement devices (16, 17) for tapping the measurement signals (S3, S4) are provided as phases (11, 12) of the pole winding arrangements, which phases are interconnected in star at the star point.

7. Drive according to one of Claims 1 to 6,
**characterized**
**in that** the device (14-20) for the determination of the rotational position of the rotor (2) comprises devices (18, 19) that standardize the measurement signals (S3, S4) .

8. Drive according to one of Claims 1 to 7,
**characterized**
**in that** the device (14-20) for the identification of the rotational position of the rotor (2) comprises a device (20) that compares the measurement signals (S3, S4) with stored table values.

9. Drive according to Claim 8,
**characterized**
**in that** value pairs or quotients of the measurement signals (S3, S4) are stored in the comparison device (20) in association with the rotational angle positions (α).

## Revendications

1. Entraînement électrique, en particulier pour un bras basculant, tel qu'un bras de robot, comportant un rotor (2), plusieurs périodes magnétiques (5, 6) ainsi qu'un moyen (14 - 20) pour déterminer la position de rotation du rotor (2) en se basant sur au moins un signal de mesure qui est décisif pour l'inductivité d'un brin d'enroulement polaire (11, 12), laquelle dépend de la position du brin d'enroulement polaire (11, 12) par rapport aux périodes magnétiques (5, 6),
**caractérisé en ce que**
il est prévu deux parties de rotor (3, 4) couplées et rotatives conjointement dans une relation fixe d'angle de rotation, et il est prévu des agencements de périodes magnétiques (5, 6) et de brins d'enroulements polaires (11, 12) qui sont séparés pour les parties de rotor (3, 4), les nombres des périodes magnétiques (5, 6) par partie de rotor (3, 4) étant premiers, et
**en ce que** le moyen pour déterminer la position de rotation du rotor (2) pour la détermination de la position à partir des signaux de mesure (S3, S4) est prévu pour les deux parties de rotor (3, 4).

2. Entraînement selon la revendication 1,
**caractérisé en ce que**
les parties de rotor (3, 4) présentent un axe de rotation commun (1).

3. Entraînement selon la revendication 1 ou 2,
**caractérisé en ce que**
les parties de rotor (3, 4) sont couplées l'une à l'autre de façon axialement rigide.

4. Entraînement selon l'une des revendications 1 à 3,
**caractérisé en ce que**
il est prévu un boîtier commun (21) pour les parties de rotor (3, 4).

5. Entraînement selon l'une des revendications 1 à 4,
**caractérisé en ce que**
le moyen (14 - 20) pour déterminer la position de rotation du rotor (2) comprend des moyens de mesure (16, 17) qui palpent les signaux de mesure (S3, S4) au niveau des agencements d'enroulements polaires à titre de signaux de tension.

6. Entraînement selon la revendication 5,
**caractérisé en ce que**
les moyens de mesure (16, 17) pour palper les signaux de mesure (S3, S4) sont prévus sous forme de brins de phase (11, 12) des agencements d'enroulements polaires, qui sont branchés au point neutre dans l'étoile.

7. Entraînement selon la revendication 1 à 6,
**caractérisé en ce que**
le moyen (14 - 20) pour déterminer la position de rotation du rotor (2) comprend des moyens (18, 19) qui normalisent les signaux de mesure (S3, S4).

8. Entraînement selon l'une des revendications 1 à 7,
**caractérisé en ce que**
le moyen (14 - 20) pour déterminer la position de rotation du rotor (2) comprend un moyen (20) qui compare les signaux de mesure (S3, S4) à des valeurs de tableau mémorisées.

9. Entraînement selon la revendication 8,
**caractérisé en ce que**
des paires de valeurs ou des quotients des signaux de mesure (S3, S4) en association à des positions d'angle de rotation (α) sont mémorisé(e)s dans le moyen de comparaison (20).
